# EUROPEAN PATENT APPLICATION

(11) **EP 3 086 536 A1**
(43) Date of publication of application: **26.10.2016**
(21) Application number: 16156389.5
(22) Date of filing: 18.02.2016
(51) Int. Cl.: H04M 1/02, G06F 1/16

(54) **MOBILE DEVICE WITH DISPLAY**

(30) Priority: 21.04.2015 CN 201510191110
(71) Applicant: Xiaomi Inc., Beijing 100085 (CN)
(72) Inventor: AI, Lixin, 100085 Haidian District (CN); YAN, Kesheng, 100085 Haidian District (CN); LI, Jinchao, 100085 Haidian District (CN); HU, Shaoxing, 100085 Haidian District (CN)
(74) Representative: Sadler, Peter Frederick

(57) **Abstract**

The disclosure relates to a mobile device comprising a frame structure (2) with a top thereof protruding inwardly to form a protrusion structure (21), a screen module (1) comprising a glass panel (11) and a LCD display module (12) adhered to a bottom surface of the glass panel (11), and a border frame (121) of the LCD display module (12) corresponding to an edge region (111) of the glass panel (11); wherein the edge region (111) cooperates with the protrusion structure (21), a vertical projection region of the border frame (121) is located within a vertical projection region of the protrusion structure (21) when the screen module (1) is assembled with the frame structure (2). By the solutions of the disclosure, a screen occupation ratio of the mobile device can be increased, and the user's experience can be improved.

## Description

### TECHNICAL FIELD

The disclosure relates to a field of terminal technology, and more specifically to mobile devices.

### BACKGROUND

As screen sizes of mobile devices are becoming larger and larger, the sizes of the mobile devices themselves have to be increased accordingly. However, though increasing of screen sizes may help users to enjoy a better visual effect, the increasing sizes of mobile devices may have adverse effects on carrying, gripping and the like for the users, to adversely affect the user's experience.

### SUMMARY

The disclosure provides a mobile device to overcome shortcomings in the related art.

According to a first aspect of embodiments of the disclosure, a mobile device is provided. The mobile device comprises:
a frame (middle-frame) structure with a top thereof protruding inwardly to form a protrusion structure;
a screen module comprising a glass panel and a LCD display module adhered to a bottom surface of the glass panel, and a border frame of the LCD display module corresponding to an edge region of the glass panel; wherein the edge region cooperates with the protrusion structure, so that a vertical projection region of the border frame is located within a vertical projection region of the protrusion structure when the screen module is assembled with the frame structure. In other words, the border frame is overlapped by the protrusion structure when viewed from above.

Optionally, a top surface of the edge region of the glass panel downwardly forms a stepped structure.

Optionally, the protrusion structure has a quadrilateral cross section; a top surface of the stepped structure is adhered to a bottom surface of the protrusion structure, or a side surface of the stepped structure is adhered to a side surface of the protrusion structure, when the screen module is assembled with the frame.

Optionally, a side surface of the stepped structure from-top-to-bottom forms a slope extending outward.

Optionally, a top surface of the edge region of the glass panel is in a shape of arch.

Optionally, a bottom surface of the protrusion structure is arch-shaped to cooperate with the edge region; wherein the top surface of the edge region is adhered to a bottom surface of the protrusion structure when the screen module is assembled with the frame structure.

Optionally, the frame structure protrudes outwardly.

Optionally, a protruding portion of the frame structure forms a vertical surface, and a compatible slope or arc is formed between an edge of the vertical surface and an outer top surface of the frame structure. A bevelled edge may therefore be formed.

The solutions provided by the embodiments of the disclosure may produce the following advantageous effects:

It would be appreciated from the above embodiments according to the disclosure that the stepped structure is formed on the edge region of the screen module, and the protrusion structure is formed at the top of the frame structure, and the stepped structure is adhered to the protrusion structure, so that the protrusion structure can block the silk printing tape of the LCD display module when the screen module is assembled with the frame structure and fixed to the frame structure, thus occupation of the silk printing tape in the screen region would be avoided, so as to increase the screen occupation ratio of the mobile device, and improve the user's experience.

It will be understood, the above brief description and the following details are only illustrative and explanatory, and the disclosure is not limited thereto.

### BRIEF DESCRIPTION OF THE DRAWINGS

The accompanying drawings, which are incorporated in and constitute a part of this application, illustrate embodiments of the invention and together with the description serve to explain the principle of the invention.
Fig. 1 shows a structure diagram of a mobile device in the related art.
Fig. 2 shows a structure diagram of a mobile device according to an exemplary embodiment of the disclosure.
Fig. 3 shows a structure diagram of another mobile device according to an exemplary embodiment of the disclosure.
Fig. 4 shows a structure diagram of a screen module according to an exemplary embodiment of the disclosure.
Fig. 5 shows a schematic diagram of a screen module assembled with a frame structure according to an exemplary embodiment of the disclosure.
Fig. 6 shows a structure diagram of a mobile device according to an exemplary embodiment of the disclosure.
Fig. 7 shows a structure diagram of a mobile device according to an exemplary embodiment of the disclosure.

### DETAILED DESCRIPTION

Hereinafter, several exemplary embodiments will be explained with examples shown in the accompanying drawings. In the drawings, unless otherwise indicated, identical or similar elements may be denoted by same reference numerals. Implementations of the exemplary embodiments described below are not intended to exclusively include all implementations of the disclosure. Instead, they are merely examples of devices and methods which are consistent with those defined in the claims and some aspects of the disclosure.

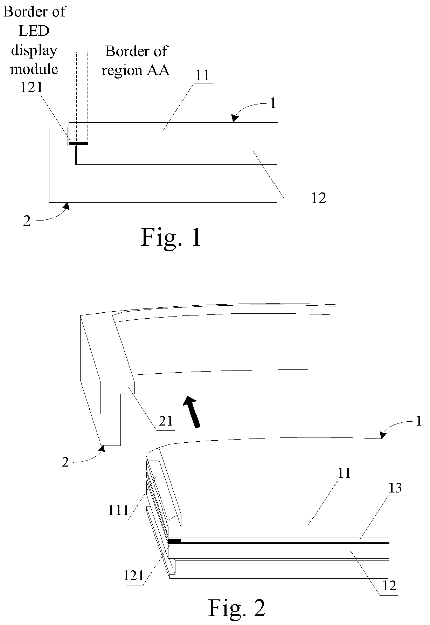

Fig. 1 shows a structure diagram of a mobile device in the related art. As shown in Fig. 1, in the related art, a stepped structure is generally inwardly formed at an edge of the frame structure 2, so, when the screen module 1 is assembled with the frame structure 2, edges of a glass panel 11 in the screen module 1 can be placed at the stepped structure. Based on such structure, an actual border of a LCD display module 12, which is adhered to the glass panel 11 on its lower portion, is a dotted line shown on the left side of Fig. 1. However, since the actual border of the LCD display module 12 is required to be blocked by a black (or some other color) border frame 121, a border of the region for actually displaying content, *i.e.,* the region AA (Active Area or effective region), is the dotted line shown on the left side of Fig. 1. That is, the black border frame 121 limits the display area of the screen.

Therefore, the disclosure aims to improve the structure of the mobile device, so as to solve technical problems of the related art.

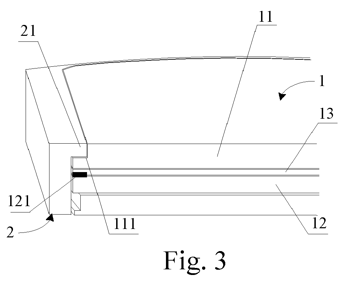

Fig. 2 shows a structure diagram of a mobile device according to an exemplary embodiment of the disclosure. As shown in Fig. 2, the mobile device may comprise:
a frame structure 2, which has a top protruding inwardly to form a protrusion structure 21;
a screen module 1, which comprises a glass panel 11 and a LCD display module 12 adhered to a bottom surface of the glass panel 11. For example, the LCD display module 12 may be adhered to the glass panel 11 by a glue tape such as an optical adhesive or liquid glue, and a glue layer 13 as shown in Fig. 3 is formed. The black border frame 121 of the LCD display module is corresponding to an edge region 111 of the glass panel 11. The edge region 111 may cooperate with the protrusion structure 21, so that a vertical projection region of the black border frame 121 is located within a vertical projection region of the protrusion structure 21 when the screen module 1 is assembled with the frame structure 2.

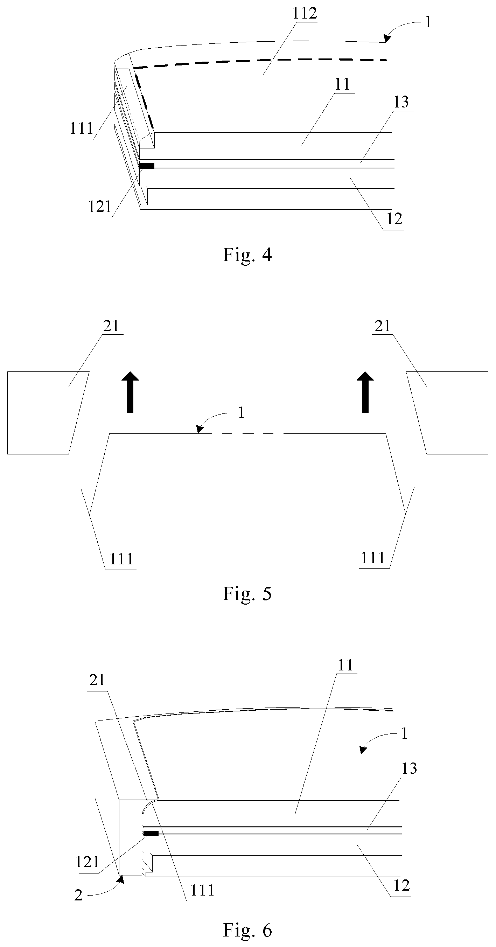

Corresponding to Fig. 2, Fig. 3 shows a perspective structure diagram of the screen module 1 assembled with the frame structure 2. It could be learned by referring to both Figs. 2 and 3, because the vertical projection region of the black border frame 121 is located within the vertical projection region of the protrusion structure 21, the black border frame 121 can be blocked. Consequently, when the user uses the mobile device, no black border caused by the black border frame 121 is visible outside of the region AA 112 (the thick dotted line in Fig. 4 indicates the border of the effective region 112), so that a screen occupation ratio of the region AA 112 is increased accordingly, and aesthetic feeling of the mobile device can be improved.

### 1. Stepped Edge

As an exemplary embodiment, the protrusion structure 21 may have a quadrilateral cross section, and the edge region 111 has a corresponding stepped structure. Moreover, when the screen module 1 is assembled with the frame structure 2, a top surface of the edge region 111 is adhered to a bottom surface of the protrusion structure 21, or a side surface of the edge region 111 is adhered to a side surface of the protrusion structure 21.

In an exemplary embodiment, for example, as shown in Figs. 2-3, the protrusion structure 21 may have a rectangle cross section, that is, an angle between the bottom and side surfaces of the protrusion structure 21 is a right angle. Moreover, in another exemplary embodiment, as shown in Fig. 5, the protrusion structure 21 has a quadrilateral cross section, more specifically, a trapezoid cross section which is wide at an upper end and narrow at a lower end, and side surface(a) of the edge region 111 from-top-to-bottom forms a slope extending outward. In this embodiment, the side surfaces of the protrusion structure 21 and the stepped structure 111 are arranged to be inclined surfaces cooperated with each other, in order to take guiding effect on assembling direction during assembling.

### 2. Arch-Shaped Edge

In another exemplary embodiment, as shown in Fig. 6, a top surface of the edge region 111 of the glass panel 11 may be arch-shaped, and a bottom surface of the protrusion structure 21 is also arch-shaped to cooperate with the edge region 111, and the top surface of the edge region 111 is adhered to the bottom surface of the protrusion structure 21 when the screen module 1 is assembled with the frame structure 2.

Of course, the above "stepped" and "arch-shaped" edges are only illustratively described. It would be understood by those skilled in the art, the edge region 111 and the protrusion structure 21 may cooperate with each other in other ways, and also applicable to the solutions of the disclosure.

### 3. Configuration of the Frame Structure 2

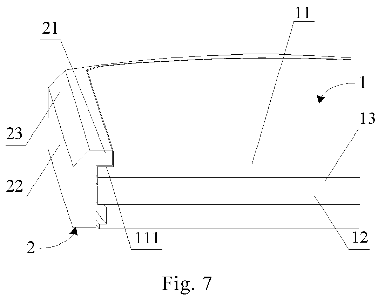

As an exemplary embodiment, as shown in Figs. 1-4 and 6, an outer surface of the frame structure 2 may form a vertical side wall. Moreover as shown in Fig. 7, the frame structure 2 of the mobile device outwardly protrudes in a left-to-right direction and in a up-and-down direction, respectively, with respect to the plane of the mobile device screen (only left side direction is shown in Fig. 7 for illustration).

Since the frame structure 2 is arranged to protrude outwardly, strength of the frame structure 2 is increased. Consequently, if the mobile device is dropped down or pressed, it could withstand the corresponding impact or pressure, to reduce damage to the mobile device. As an exemplary embodiment, for example, as shown in Fig. 7, the protruding portion of the frame structure 2 may form a vertical surface 22, and a compatible inclined surface 23 or arc (not shown) is formed between an edge of the surface 22 and the outer edge of the top surface of the frame structure 2.

The frame structure, and particularly the side wall, may have a certain thickness around the edge of the mobile device. As an example, in the embodiment of Figures 2-6,the thickness of the frame structure 2 may be 0.5mm, and the width of the protrusion structure 21 may be 0.4mm. In the embodiment of Figure 7 the thickness of the frame structure 2 may be 0.7mm,and the width of the protrusion structure 21 may be 0.4mm.

It would be appreciated from the above embodiments according to the disclosure that the protrusion structure 21 is formed at the top of the frame structure 2, and the edge region 111 cooperates with the protrusion structure 21 (the edge region 111 is adhered to the protrusion structure 21) in the screen module 1, so that the protrusion structure 21 can block the black border region 121 of the LCD display module 12 when the screen module 1 is assembled and fixed with the frame structure 2, thus occupation of the black border region 121 in the screen region can be avoided, to increase the screen occupation ratio of the mobile device, and improve the user's experience.

## Claims

1. A mobile device, **characterized in that** the mobile device comprises:
a frame structure (2) with a top thereof protruding inwardly to form a protrusion structure (21);
a screen module (1), which comprises a glass panel (11) and a LCD display module (12) adhered to a bottom surface of the glass panel (11), and a border frame (121) of the LCD display module (12) in correspondence to an edge region (111) of the glass panel (11); wherein the edge region (111) cooperates with the protrusion structure (21), so that a vertical projection region of the border frame (121) is located within a vertical projection region of the protrusion structure (21) when the screen module (1) is assembled with the frame structure (2).

2. The device according to claim 1, **characterized in that** a top surface of the edge region (111) of the glass panel (11) downwardly forms a stepped structure.

3. The device according to claim 2, **characterized in that** the protrusion structure (21) has a quadrilateral cross section; and a top surface of the stepped structure is adhered to a bottom surface of the protrusion structure (21), or a side surface of the stepped structure is adhered to a side surface of the protrusion structure (21), when the screen module (1) is assembled with the frame structure (2).

4. The device according to claim 3, **characterized in that** a side surface of the stepped structure from-top-to-bottom forms a slope extending outwardly.

5. The device according to claim 1, **characterized in that** a top surface of the edge region (111) of the glass panel (11) is arch-shaped.

6. The device according to claim 5, **characterized in that** the bottom surface of the protrusion structure (21) is arch-shaped to cooperate with the edge region (111); and wherein the top surface of the edge region (111) is adhered to the bottom surface of the protrusion structure (21) when the screen module (1) is assembled with the frame structure (2).

7. The device according to any preceding claim, **characterized in that** the frame structure (2) protrudes outwardly.

8. The device according to claim 7, **characterized in that** a protruding portion of the frame structure (2) forms a vertical surface, and a compatible inclined surface or arc is formed between an edge of the vertical surface and an outer end of the top surface of the frame structure (2).
